Europäisches Patentamt

European Patent Office

Office européen des brevets

(19)

(11) Numéro de publication : **0 314 555 B1**

(12)

# FASCICULE DE BREVET EUROPEEN

(45) Date de publication du fascicule du brevet :
**18.12.91 Bulletin 91/51**

(51) Int. Cl.⁵ : **G01N 1/00, A61M 5/00, G01F 11/16**

(21) Numéro de dépôt : **88402671.7**

(22) Date de dépôt : **24.10.88**

(54) **Vanne d'échantillonnage à déplacement linéaire et son dispositif de fixation.**

(30) Priorité : **30.10.87 FR 8715045**

(43) Date de publication de la demande :
**03.05.89 Bulletin 89/18**

(45) Mention de la délivrance du brevet :
**18.12.91 Bulletin 91/51**

(84) Etats contractants désignés :
**AT BE CH DE ES FR GB IT LI LU NL SE**

(56) Documents cités :
**US-A- 3 567 389**
**US-A- 3 908 463**
**US-A- 3 990 853**
**US-A- 4 493 476**

(73) Titulaire : **ABX , Société Anonyme dite**
**Parc Euromédecine, 128, rue du Caducée**
**F-34184 Montpellier Cédex 4 (FR)**

(72) Inventeur : **Champseix, Henri**
**4 Avenue Audran**
**F-78360 Montesson (FR)**
Inventeur : **Champseix, Serge**
**29bis rue des Puiseux**
**F-78130 Les Mureaux (FR)**

(74) Mandataire : **Lhuillier, René et al**
**ARMENGAUD JEUNE CABINET LEPEUDRY 6,**
**rue du Fg. St-Honoré**
**F-75008 Paris (FR)**

EP 0 314 555 B1

Jouve, 18, rue Saint-Denis, 75001 PARIS

## Description

L'invention qui se rapporte aux vannes d'échantillonnage à déplacement linéaire, notamment pour le transfert d'échantillons de sang, concerne plus précisément la structure de la vanne et son dispositif de fixation favorisant son montage et son démontage tout en assurant une étanchéité plus efficace.

On connaît bien ce type de vanne à déplacement linéaire, essentiellement constituée d'un élément central mobile pris en sandwich entre deux éléments externes fixes. Ledit élément central est pourvu d'au moins un orifice de passage transversal et se déplace en translation d'une première position fixe à une seconde position fixe où pour chacune l'orifice en question se trouve aligné avec un ou deux orifices opposés prévus sur les éléments externes permettant de raccorder deux conduits ou de segmenter un volume d'échantillon et le transférer à un autre trajet. L'élément central coulisse entre les deux éléments fixes sous l'action d'une tige de vérin avec rappel par ressort. Ce type de vanne se prête particulièrement au transfert de liquides tels que le sang, mais les conduits, et les orifices doivent toujours être correctement drainés et nettoyés pour que les échantillonnages soient assurés dans les meilleures conditions de fonctionnement et de propreté. Bien que des tolérances précises de fabrication aient été observées, et que les étanchéités soient correctes, il est toujours indispensable, sur les vannes de ce type, de pouvoir accéder fréquemment aux pièces principales que sont l'élément central mobile et les éléments externes, pour le nettoyer, purger les orifices, régler ou affiner la course de déplacement de la partie coulissante etc....

Un autre dispositif est connu de US-A-3990853, dans lequel une vanne à déplacement linéaire est essentiellement constituée d'un élément central mobile pris en sandwich entre deux éléments fixes placés au dessus et en dessous de l'élément central.

Sur les vannes classiques, ces opérations de démontage sont longues et fastidieuses car elles impliquent le dévissage de plusieurs pièces, le débranchement des conduits d'admission et de départ et la dépose d'organes protecteurs, avant de pouvoir dégager les pièces centrales.

Aussi dans le but de simplifier ces opérations de montage-démontage en même temps que réduire les pièces qui constituent la vanne, et en vue d'obtenir un ensemble d'encombrement réduit et d'en améliorer le fonctionnement, l'invention propose une vanne et un dispositif de fixation de ses éléments qui évite ensuite les inconvénients propres aux vannes à déplacement linéaire de type connu.

Un objet de la présente invention consiste donc en une vanne d'échantillonnage à déplacement linéaire et le dispositif de fixation de ses éléments essentiellement constitués d'un élément central mobile pourvu d'au moins un orifice de passage transversal, et apte à effectuer un mouvement coulissant sous l'action d'un organe moteur d'un vérin, pour que l'orifice transversal se trouve aligné avec l'un ou l'autre de plusieurs orifices opposés prévus sur des pièces fixes de guidage placées de part et d'autre dudit élément central, dispositif selon lequel l'élément central coulissant et ses deux pièces fixes de guidage latéral sont profilées et chanfreinées pour présenter des faces de portée ayant une surface de frottement réduire et constituent un ensemble parallélépipédique qui est maintenu sur quatre de ses faces par des organes fixes lui servant de berceau, et qui est maintenu sur sa cinquième face par un flasque de verrouillage à dégagement manuel, et sur sa sixième face par un organe de serrage pivotant à dégagement rapide.

Plus précisément selon l'invention, l'ensemble constitué par l'élément central coulissant et les deux pièces fixes de guidage latéral est en appui le long de ses faces longitudinales inférieures et supérieures sur un guide inférieur et un guide supérieur solidaires d'un même support fixe, et le long d'une de ses faces d'extrémité sur une embase fixée à une plaque-support.

Selon encore d'autres caractéristiques de l'invention le flasque de verrouillage est rapporté sur les guides inférieur et supérieur et maintenu appliqué contre eux par des vis solidaires des guides, coopérant avec des lumières du flasque conçues pour permettre le verrouillage ou le déverrouillage dudit flasque sur les guides à la façon connue en soi d'un système à baïonnette.

D'autre part l'organe de serrage est un basculeur monté pivotant autour d'un axe fixé sur l'embase, dont une extrémité forme une tête venant en appui sur une des pièces fixes de guidage de l'ensemble central, un ressort de serrage assurant la poussée de la tête sur la face extérieure de ladite pièce de guidage.

La description suivante fera apparaître les avantages de l'invention et d'autres caractéristiques particulières. Elle fait référence aux dessins annexés qui représentent :

figure 1 une vue d'ensemble en perspective du dispositif de fixation de la vanne d'échantillonnage ;

figure 2 une vue éclatée en perspective des éléments constitutifs de la vanne et des pièces de fixation ;

figure 3 une vue d'ensemble en perspective de la vanne partiellement démontée,

figure 4, une vue en coupe à plus grande échelle de l'élément central,

figure 5, une vue en coupe à plus grande échelle d'une pièce fixe de guidage.

La vanne d'échantillonnage représentée sur les figures utilise un élément central 1 à déplacement linéaire qui coulisse à frottement doux entre deux pièces fixes de guidage 2, placées de part et d'autre, l'élément central possédant un orifice de passage transversal 3 apte à se placer, selon la position dudit élément, en face de l'un ou l'autre de deux orifices voisins 4, prévus sur chaque guide latéral 2 et les mettre ainsi en communication. Des petits conduits en plastique souple 5 sont emmanchés sur des embouts 6 prévus au droit des orifices 4.

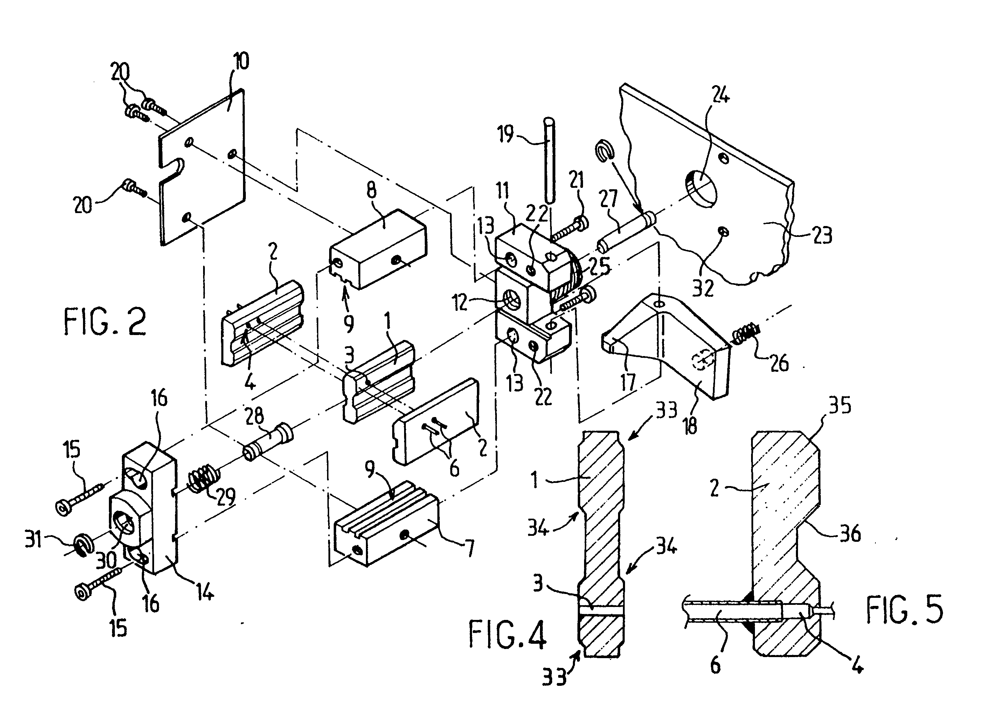

L'élément central mobile 1 se présente comme une plaquette rectangulaire dont les quatre arêtes longitudinales 33 sont chanfreinées et dont les deux faces de plus grande dimension portent en leur milieu un évidement longitudinal 34 comme on le voit à la figure 4.

Chacune des pièces fixes de guidage latéral 2 se présente comme une plaquette rectangulaire dont les arêtes longitudinales 35 de leur face orientée vers l'élément central mobile 1 sont chanfreinées et dont la face correspondante porte en son milieu un évidement longitudinal 36, comme le montre la figure 5.

Ainsi chanfreinées et munies d'évidements longitudinaux l'élément central 1 et les pièces de guidage 2 qui l'enserrent présentent des faces de portée à surface de frottement réduite ce qui facilite le déplacement étanche de l'élément central par rapport aux deux autres. Par ailleurs un guide inférieur 7 et un guide supérieur 8 se présentant comme des blocs parallélépipédiques sont en appui au-dessous et au-dessus de l'ensemble précité c'est-à-dire le long de ses faces longitudinales inférieures et supérieures. Sur leurs faces d'appui sont prévues des rainures 9 qui diminuent la surface de frottement avec l'élément central coulissant 1. Ces guides 7 et 8 sont fixés par un de leur côté à une même tôle verticale de maintien 10 par des vis 20. Cette tôle 10 est fixée également par une vis 20 à une embase support 11 sur laquelle vient en appui la face d'extrémité de l'élément central, embase qui possède une ouverture centrale 12 et deux orifices hauts et bas 13 grâce auxquels ladite embase est également fixée par des vis 21 aux guides inférieur et supérieur 7 et 8. D'autre orifices 22 en haut et en bas de l'embase 11 permettent de la fixer à une plaque support 23, qui est une plaque fixe rapportée sur l'appareil, ou qui fait partie du châssis de l'appareil. Cette plaque est percée d'une ouverture 24 pour le passage d'un manchon fileté 25, prévu sur la face arrière de l'embase coaxialement à l'ouverture 12. Le manchon 25 sert support à un vérin de commande non représenté placé derrière la plaque 23. Deux autres orifices 32 sont également prévus sur la plaque 23 pour le passage des vis 21 de fixation de l'embase 11. La tôle 10 constitue aussi une face d'appui pour une des pièces de guidage de l'ensemble central.

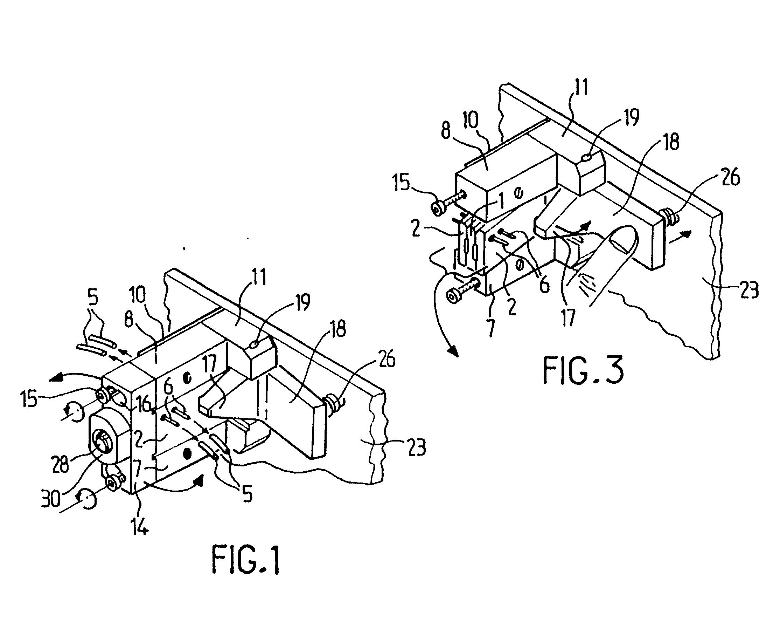

Du côté opposé à l'embase 11, un flasque de verrouillage 14 est rapporté sur les guides inférieur et supérieur 7 et 8 maintenu appliqué contre eux par des vis de fixation 15 solidaires des guides coopérant avec des lumières 16 du flasque, conçues à la façon d'un système à baïonnette pour permettre le dégagement du flasque par pivotement comme le montrent les flèches à la figure 1.

Les trois pièces centrales 1 et 2 qui constituent un ensemble sensiblement parallélipipédique se trouvent ainsi enserrées dans un berceau constitué, sur une de ses extrémités longitudinale par l'embase 11, sur ses bords inférieurs et supérieurs par les guides 7 et 8 et sur un côté par la tôle 10. Sur le côté opposé à la tôle, vient en appui sur la pièce de guidage 2, la tête 17 d'un basculeur 18 monté pivotant autour d'un axe vertical 19, lequel axe tourillonne sur l'embase support 11 de telle sorte que le basculeur s'articule sur cette embase. Le basculeur 18 est rappelé par un ressort de serrage 26 prenant appui sur la plaque 23, qui exerce une poussée sur la branche correspondante du basculeur et par conséquent une poussée de la tête 17 sur la face extérieure de la pièce de guidage 2, sensiblement en son centre. Le basculeur constitue ainsi le système de serrage des trois principaux éléments de la vanne.

Enfin l'élément central coulissant 1 est manoeuvré entre les pièces de guidage 2 par la tige du vérin non représenté, et par l'intermédiaire d'un axe de commande 27 qui traverse le manchon 25 et l'ouverture 12 pour venir en butée contre l'extrémité de l'élément central 1. De l'autre côté de celui-ci vient en butée un axe de rappel 28 sur lequel est emmanché un ressort 29 dont l'extrémité est immobilisée dans un orifice central 30 du flasque 14 par un clips 31. Les éléments centraux 1 et 2 de la vanne d'échantillonnage sont donc maintenus de tous les côtés comme le montre la figure 1. Quand on veut assurer le démontage de la vanne on commence par dégager directement les petits conduits 5 des embouts 6 sur lesquels ils sont emmanchés et on dévisse de quelques tours les vis 15 comme le montrent les flèches. Puis on saisit le flasque de verrouillage 14 et en le faisant tourner dans le sens des flèches de la figure 1 on fait échapper les parties de plus grand diamètre de chaque lumière 16, de la tête de chaque vis 15, de telle sorte qu'on puisse dégager ledit flasque vers l'avant. En dégageant le flasque on dégage aussi le ressort 29 et l'axe du rappel 28 qui du fait de leur configuration, restent maintenus dans l'orifice 30 dudit flasque. Enfin on effectue une pression sur le levier basculeur 18, comme le montre la figure 3. Cette action fait pivoter le basculeur 18 autour de son axe 19, à l'encontre de la force du ressort de serrage 26, et la tête 17 du basculeur s'écarte par conséquent de la paroi extérieure de la pièce fixe de guidage 2. L'ensemble que constituent ces trois pièces centrales 1 et 2 peut donc être rapidement dégagé vers l'avant, comme le montre la flèche de la figure 3. Ces pièces étant en appui les unes sur les autres sont facilement dissociables et peuvent être inspectées et nettoyées sans difficulté. Pour leur remontage, on appuie à nouveau sur le levier basculeur 18 pour pouvoir les replacer en bonne position entre les guides inférieur et supérieur 7 et 8, avant de remonter le flasque de verrouillage 14 et connecter les petits conduits 5.

L'étanchéité de la vanne en fonctionnement est efficace du fait que la force du ressort de réglage 26 s'exerce par l'intermédiaire de la tête 17 du basculeur, au centre de la vanne, ce qui répartit ainsi la pression d'application. En outre, du fait du profil particulier de l'élément central ainsi que des pièces de guidage qui l'entourent, les surfaces de frottement sont réduites et le déplacement de la pièce centrale 1 est aisé avec un vérin de faible puissance. De plus grâce au nombre réduit de pièces mises en oeuvre, ladite vanne est d'un faible coût. Enfin, comme on le voit à la figure 1 les organes qui enveloppent et maintiennent la partie centrale sont de dimensions restreintes ; ainsi la vanne d'échantillonnage présente un encombrement réduit qui permet de la positionner au plus près de l'organe de prélèvement, et réduire ainsi les longueurs des connexions.

**Revendications**

1. Vanne d'échantillonnage à déplacement linéaire et dispositif de fixation de ses éléments essentiellement constitués d'un élément central (1) mobile pourvu d'au moins un orifice de passage transversal (3) et apte à effectuer un mouvement coulissant sous l'action d'un organe moteur d'un vérin, pour que l'orifice transversal (3) se trouve aligné avec l'un ou l'autre de plusieurs orifices (4) opposés prévus sur des pièces fixes de guidage latéral (2) placées de part et d'autre dudit élément central (1), caractérisé en ce que l'élément central coulissant (1) et ses deux pièces fixes de guidage latéral (2) sont profilées et chanfreinées pour présenter des faces de portée ayant une surface de frottement réduite et constituent un ensemble parallélépipédique qui est maintenu sur quatre de ses faces par des organes fixes (7, 8, 10, 11) lui servant de berceau, et qui est maintenu sur sa cinquième face par un flasque de verrouillage (14) à dégagement manuel, et sur sa sixième face par un organe de serrage (17, 18, 26) pivotant à dégagement rapide.

2. Vanne d'échantillonnage selon la revendication 1, caractérisée en ce que l'élément central mobile (1) se présente comme une plaquette rectangulaire dont les quatre arêtes longitudinales (33) sont chanfreinées et dont les deux faces de plus grande dimension portent en leur milieu un évidement longitudinal (34).

3. Vanne d'échantillonnage selon les revendications 1 et 2, caractérisée en ce que les pièces de guidage latéral (2) se présentent chacune comme une plaquette rectangulaire dont les arêtes longitudinales (35) de leur face orientée vers l'élément central mobile (1), sont chanfreinées et dont la face correspondante porte en son milieu un évidement longitudinal (36).

4. Vanne d'échantillonnage selon les revendications 1 et 3 caractérisée en ce que des embouts (6) sont prévus sur la face extérieure de chaque pièce fixe de guidage latéral (2), au droit des orifices de passage transversal (3).

5. Vanne d'échantillonnage selon la revendication 1, caractérisée en ce que l'ensemble constitué par l'élément central coulissant (1) et les deux pièces fixes de guidage latéral (2) est en appui le long de ses faces longitudinales inférieures et supérieures sur un guide inférieur (7) et un guide supérieur (8) solidaires d'un même support fixe (10).

6. Vanne d'échantillonnage selon la revendication 1, caractérisée en ce que l'ensemble constitué par l'élément central coulissant (1) et les deux pièces fixes de guidage latéral (2) est en appui le long d'une de ses faces d'extrémité sur une embase (11) fixée à une plaque support (23).

7. Vanne d'échantillonnage selon les revendications 5 et 6, caractérisée en ce que le support fixe (10) auquel sont rattachés les guides inférieur (7) et supérieur (8) est une tôle de maintien constituant une face latérale du berceau de l'ensemble central (1, 2), et en ce que ladite tôle est elle-même fixée à l'embase support (11).

8. Vanne d'échantillonnage selon la revendication 5, caractérisée en ce que les guides (7 et 8) sont munis de rainures longitudinales (9) sur leur face d'appui sur l'ensemble central (1, 2).

9. Vanne d'échantillonnage selon la revendication 6, caractérisée en ce que la plaque (23) est percée d'un ouverture (24) pour le passage d'un manchon fileté (25), débordant de la face arrière de l'embase (11) et coaxial à une ouverture (12) prévue au centre de ladite embase (11).

10. Vanne d'échantillonnage selon les revendications 1 et 5, caractérisée en ce que le flasque de verrouillage (14) est rapporté sur les guides inférieur (7) et supérieur (8) et maintenu appliqué contre eux par des vis (15) solidaires des guides, coopérant avec des lumières (16) du flasque (14) conçues pour permettre le verrouillage ou le déverrouillage dudit flasque (14) sur les guides (7, 8) à la façon d'un système à baïonnette.

11. Vanne d'échantillonnage selon les revendications 1 et 6, caractérisée en ce que l'organe de serrage est un basculeur (18) monté pivotant autour d'un axe (19) fixé sur l'embase (11), dont une extrémité (17) forme un tête venant en appui sur une des pièces fixes de guidage (2) de l'ensemble central (1, 2), un ressort de serrage (26) assurant la poussée de la tête (17) sur la face extérieure de ladite pièce fixe de guidage (2).

12. Vanne d'échantillonnage selon les revendications 1 et 9, caractérisée en ce que l'élément central mobile (1) est manoeuvré d'un côté par l'intermédiaire d'un axe de commande (27) traversant le manchon (25) et l'embase (11), un axe de rappel (28) venant en butée de l'autre côté dudit élément mobile (1) et coopérant avec un ressort (29) maintenu par le flasque de verrouillage (14).

## Patentansprüche

1. Probenentnahmeventil mit linearer Verschiebung und seine Befestigungsvorrichtung insbesondere für seine Teile, die es im wesentlichen umfaßt : ein bewegbares Mittelteil (1), das mit wenigstens einer querdurchgehenden Öffnung (3) versehen ist, und unter der Wirkung eines Druckzylinders als Bewegungsorgan eine Gleitbewegung machen kann, damit sich die Queröffnung in einer Flucht mit der einen oder anderen von mehreren Öffnungen (4) befinden kann, die einander gegenüberliegend auf seitlichen, feststehenden Führungsteilen (2) beiderseits von dem Mittelteil angeordnet sind, dadurch gekennzeichnet, daß das verschiebliche Mittelteil (1) und seine beiden seitlichen, feststehenden Führungsteile (2) profiliert und abgeschrägt sind, damit sie Tragflächen mit verminderter Reibfläche aufweisen, und die eine kubische Einheit bilden, die auf vier ihrer Stirnflächen durch für sie als Aufnahmelager dienende, feststehende Organe (7, 8, 10, 11) abgestützt wird und die auf ihrer fünften Stirnfläche durch einen Verriegelungsflansch (14) zur Loslösung mit der Hand und auf ihrer sechsten Stirnfläche durch ein schwenkbares Andrückorgan (17, 18, 26) zur schnellen Loslösung gehalten wird.

2. Probenentnahmeventil nach Anspruch 1, dadurch gekennzeichnet, daß das bewegliche Mittelteil (1) als eine kleine rechteckige Platte ausgebildet ist, deren vier Längskanten (33) abgeschrägt sind und deren zwei größere Stirnflächen in ihrer Mitte eine Längsausnehmung (34) tragen.

3. Probenentnahmeventil nach Anspruch 1 und 2, dadurch gekennzeichnet, daß die seitlichen Führungsteile (2) jedes als eine kleine rechteckige Platte ausgebildet sind, deren Längskanten (35) an der zum bewegbaren Mittelteil (1) gewendeten Seite abgeschrägt sind, und deren entsprechende Seitenfläche in ihrer Mitte eine Längsausnehmung (36) trägt.

4. Probenentnahmeventil nach Anspruch 1 und 3, dadurch gekennzeichnet, daß Schlauchanschlüsse (6) an der Außenseite von jedem feststehenden, seitlichen Führungsteil (2) gerade gegenüber der quer durchgehenden Öffnung (3) vorgesehen sind.

5. Probenentnahmeventil nach Anspruch 1, dadurch gekennzeichnet, daß die aus dem verschieblichen Mittelteil (1) und den beiden feststehenden, seitlichen Führungsteilen (2) bestehende Einheit sich auf ihren unteren und oberen Längsflächen auf einer unteren und einer oberen Führung (7, 8) abstützen, die an derselben festen Auflage (10) angebracht sind.

6. Probenentnahmeventil nach Anspruch 1, dadurch gekennzeichnet, daß die aus verschieblichen Mittelteil (1) und den beiden feststehenden, seitlichen Führungsteilen (2) bestehende Einheit mit einer ihrer Endflächen gegen einen Auflage-Sockel (11) stößt, der seinerseits auf einer Auflage-Platte (23) befestigt ist.

7. Probenentnahmeventil nach Anspruch 5 und 6, dadurch gekennzeichnet, daß die feste Auflage (10), an der die untere und die obere Führung (7, 8) angebracht sind, ein Halteblech ist, das eine Seitenfläche der Aufnahme für die Zentral-Einheit (1, 2) bildet und daß das genannte Blech seinerseits am Auflage-Sockel (11) befestigt ist.

8. Probenentnahmeventil nach Anspruch 5, dadurch gekennzeichnet, daß die Führungen (7, 8) auf ihrer zur Zentral-Einheit (1, 2) gekehrten Seite mit Längsnuten (9) versehen sind.

9. Probenentnahmeventil nach Anspruch 6, dadurch gekennzeichnet, daß die Auflage-Platte (23) für den Durchgang einer Gewinde-Muffe (25) mit einem Loch (24) versehen ist, wobei die Gewinde-Muffe hinten aus dem Sockel (11) koaxial mit einer in der Mitte von diesem vorgesehenen Öffnung (12) herauskommt.

10. Probenentnahmeventil nach Anspruch 1 und 5, dadurch gekennzeichnet, daß der Verriegelungsflansch (14) an der unteren und der oberen Führung (7, 8) angesetzt und an ihnen befestigt gehalten ist durch an den Führungen angebrachte Schrauben (15), die mit Löchern (16) des Flansches (14) derart zusammenwirken, daß sie die Ver- und Entriegelung des Flansches (14) mit oder von den Führungen in der Art und Weise des Bajonett-Systems ermöglichen.

11. Probenentnahmeventil nach Anspruch 1 und 6, dadurch gekennzeichnet, daß das Andrück-Organ (17, 18, 26) eine Wippe (18) umfaßt, die schwenkbar um eine an dem Sockel (11) angebrachte Achse (19) ist, wobei das eine Ende der Wippe einen Kopf (17) bildet, der auf einem der feststehenden Führungsteile (2) der Zentral-Einheit (1, 2) aufliegt, und wobei eine Druckfeder (26) den Andruck des Kopfes (17) auf der Außenfläche des genannten feststehenden Führungsteiles sichert.

12. Probenentnahmeventil nach Anspruch 1 und 9, dadurch gekennzeichnet, daß das bewegbare Mittelteil (1) von einer Seite vermittels einer Betätigungsachse (27) gesteuert wird, die die Gewinde-Muffe (25) und den Sockel (11) durchquert, wodurch eine Rückstoßachse (28) an die andere Seite des bewegbaren Mittelteiles stößt und mit einer Feder (29) zusammenwirken kann, die von dem Verriegelungsflansch (14) gehalten wird.

## Claims

1. Sampling valve with linear displacement, and device for fixing its elements, which are essentially constituted by a mobile central element (1) provided with at least one transverse passage orifice (3) and adapted to effect a sliding movement due to the action of a driving part of a jack, so that the transverse orifice (3) is aligned with one or other of a plurality of opposite orifices (4) provided on fixed lateral guide parts (2) situated at the respective sides of the said central element (1), characterised in that the sliding central element (1) and its two fixed lateral guide parts (2) are profiled and chamfered to have bearing faces having a reduced friction surface and constitute a parallelepipedic assembly which is held at four of its faces by fixed parts (7, 8, 10, 11) serving as its cradle, and which is held at its fifth face by a manual-release locking end plate (14), and at its sixth face by a rapid-release pivoting-type clamping means (17, 18, 26).

2. Sampling valve according to claim 1, characterised in that the mobile central element (1) is in the form of a small rectangular plate whose four longitudinal edges (33) are chamfered and whose larger faces comprise in their middle region a longitudinal recess (34).

3. Sampling valve according to claims 1 and 2, characterised in that the lateral guide parts (2) are each in the form of a small rectangular plate, wherein the longitudinal edges (35) of their face which is directed towards the mobile central element (1) are chamfered and whereof the corresponding face comprises in its middle region a longitudinal recess (36).

4. Sampling valve according to claims 1 and 3, characterised in that nozzles (6) are arranged on the external face of each fixed lateral guide part (2), opposite the transverse passage orifices (3).

5. Sampling valve according to claim 1, characterised in that the assembly constituted by the sliding central element (1) and the two fixed lateral guide parts (2) bears, along its lower and upper longitudinal faces, on a lower guide (7) and an upper guide (8) which are integral with one and the same fixed support (10).

6. Sampling valve according to claim 1, characterised in that the assembly constituted by the sliding central element (1) and the two fixed lateral guide parts (2) bears, along one of its end faces, on a base part (11) which is fixed to a support plate (23).

7. Sampling valve according to claims 5 and 6, characterised in that the fixed support (10) to which the lower (7) and upper (8) guides are attached is a metal plate having a holding function and constituting a lateral face of the cradle of the central assembly (1, 2), and in that the said metal plate is itself fixed to the supporting base part (11).

8. Sampling valve according to claim 5, characterised in that the guides (7 and 8) are provided with longitudinal grooves (9) on their face which bears on the central assembly (1, 2).

9. Sampling valve according to claim 6, characterised in that the plate (23) is perforated with an aperture (24) for the passage of a screwthreaded sleeve (25), projecting from the rear face of the base part (11) and coaxial with an aperture (12) provided at the centre of the said base part (11).

10. Sampling valve according to claims 1 and 5, characterised in that the locking end plate (14) is fitted on to the lower (7) and upper (8) guides and held applied against these by screws (15) integral with the guides, cooperating with holes (16) of the end plate (14) which are designed for allowing the locking or unlocking of the said end plate (14) on the guides (7, 8) in the manner of a bayonet joint.

11. Sampling valve according to claims 1 and 6, characterised in that the clamping means is a rocker (18) mounted to be pivotable about a pin (19) fixed to the base part (11), with one end (17) forming a head which bears on one of the fixed guide parts (2) of the central assembly (1, 2), a clamping spring (26) pressing the head (17) on to the external face of the said fixed guide part (2).

12. Sampling valve according to claims 1 and 9, characterised in that the mobile central element (1) is manipulated at the one side by means of a control pin (27) extending through the sleeve (25) and the base part (11), a return pin (28) coming to abut at the other side of the said mobile element (1) and co-operating with a spring (29) held by the locking end plate (14).

FIG.1

FIG.3

EP 0 314 555 B1

FIG. 2

FIG. 4

FIG. 5